# EUROPEAN PATENT APPLICATION

(11) **EP 1 755 188 A1**
(43) Date of publication of application: **21.02.2007**
(21) Application number: 04745683.5
(22) Date of filing: 08.06.2004
(51) Int. Cl.: H01M 8/04, G01N 27/04

(54) **FUEL CELL CURRENT DISTRIBUTION MEASURING EQUIPMENT AND FUEL CELL CURRENT DISTRIBUTION MEASURING METHOD**

(30) Priority: 09.04.2004 JP 2004116107
(71) Applicant: Espec Corp., Kita-ku Osaka-shi, Osaka 5308550 (JP)
(72) Inventor: KATAOKA, Masayoshi c/o ESPEC Corp., Osaka 530-8550 (JP)
(74) Representative: Bentz, Jean-Paul
(86) International application number: PCT/JP2004/007973
(87) International publication number: WO 2005/101557

(57) **Abstract**

A fuel cell current distribution measuring apparatus (50) measures electromotive force distribution on an electrode surface of a fuel cell (10) which includes: an electrolyte (1); and a pair of a fuel electrode (2) and an air electrode (4) between which the electrolyte (1) is provided. The fuel cell current distribution measuring apparatus (50) includes: a plurality of probe pins (35) which are touched by a non-compartment area on an external surface of a fuel-electrode-side separator (3) being one of separators of the pair of the fuel electrode (2) and the air electrode (4); and a current measuring section (44) for measuring a current in each of the probe pins (35). Therefore, it is possible to provide a fuel cell current distribution measuring apparatus and a fuel cell current distribution measuring method, each of which allows for exact reproduction of a partial electromotive force in an electromotive force obtained from the whole of electrodes of the fuel cell.

## Description

### TECHNICAL FIELD

The present invention relates to (i) a fuel cell current distribution measuring equipment (apparatus) and (ii) a fuel cell current distribution measuring method, each of which allows for measuring electromotive force distribution on an electrode surface of a fuel cell including an electrolyte and a pair of electrodes between which the electrolyte is provided.

### BACKGROUND ART

Fuel cells convert chemical energy directly into electric energy by use of an electrochemical reaction of gas. Fuel cells have high power generation efficiency because the fuel cells are not restricted by Carnot efficiency, and gas from the fuel cells is clean and has little influence on environments. Therefore, recently, it is expected that fuel cells can be applied for various purposes such as power generation and powers for low-emission vehicles. The fuel cells can be classified according to their electrolytes. Examples of the fuel cells include a phosphoric acid fuel cell, a molten carbonate fuel cell, a solid electrolyte fuel cell, and a proton-exchange membrane fuel cell.

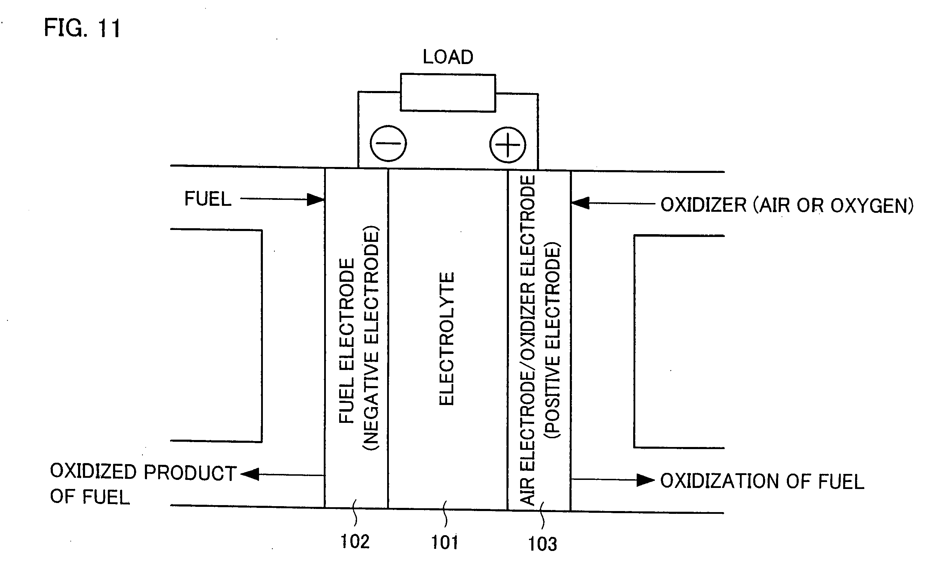

Generally, as illustrated in Fig. 11, a fuel cell includes, as a power generation unit, an electrode-electrolyte structure which includes an electrolyte 101 and a pair of electrodes (a fuel electrode 102 and an oxidizer electrode 103) provided at both sides of the electrolyte 101. The fuel cell supplies fuel gas such as hydrogen or hydrocarbon to the fuel electrode 102 while supplying oxidizer gas such as oxygen or air to the oxidizer electrode 103 so that an electrochemical reaction proceeds in a three-phase interface among gas, the electrolyte 101, and the electrodes (the fuel electrode 102 and the oxidizer electrode 103). This results in obtaining an electricity.

In a fuel cell, it is important that an electrode reaction proceeds uniformly in the whole of an electrode-electrolyte structure. However, there is a case where the electrode reaction does not proceed uniformly in the whole of the electrode-electrolyte structure. This is because moisture content in the electrolyte or deterioration in the electrolyte varies from place to place in the electrode-electrolyte structure, or because density of hydrogen in fuel gas or density of oxygen in air vary from place to place in the electrode-electrolyte structure. Namely, there is a case where the degree of the electrode reaction varies from place to place in the electrode-electrolyte structure. Therefore, by comprehending the degree of the electrode reaction for each part of the electrode-electrolyte structure, it is possible at least to optimize components such as the electrolyte and electrode catalysts, and to optimize the amount of moisturization of fuel gas or oxidizer gas. Further, it is possible to know the cause of deterioration in the electrode-electrolyte structure and/or to know how the deterioration proceeds. For that reason, it is necessary to check distribution of the electrode reaction in the electrode-electrolyte structure.

An example of a conventional method for checking distribution of an electrode reaction in an electrode-electrolyte structure is a "system for measuring distribution of electrode reaction and method for measuring distribution of electrode reaction" disclosed in Japanese Unexamined Patent Publication No. 77515/2003 (Tokukai 2003-77515; published on March 14, 2003).

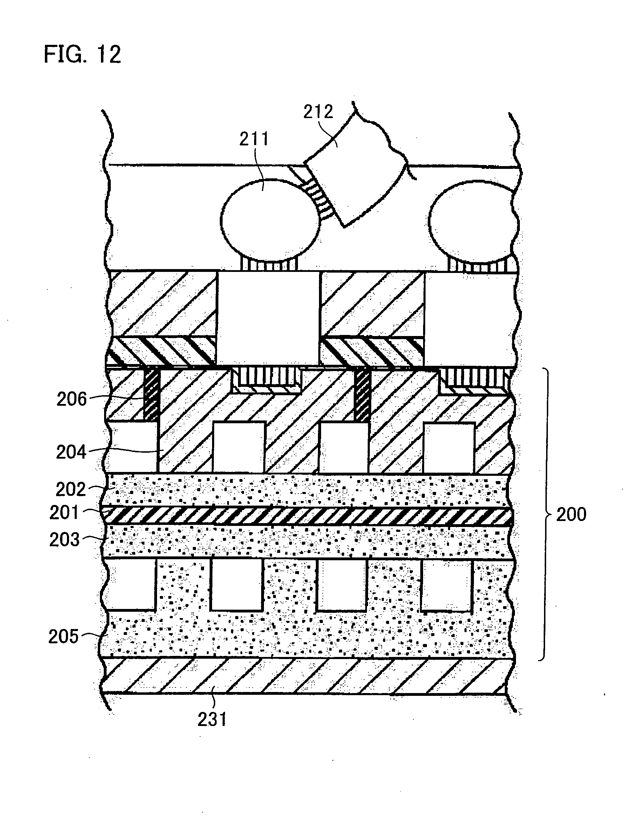

This publication discloses a method in which one of the electrodes is divided into predetermined areas and a reaction current for each of the predetermined areas is measured. To be specific, as illustrated in Fig. 12, an electrode-electrolyte structure 200 which is a fuel cell includes an electrolyte 201, a pair of electrodes 202 and 203 provided at both sides of the electrolyte 201, and current collectors 204 and 205 provided at both sides of the pair of electrodes 202 and 203.

The current collector 204 is compartmentalized into lattice areas by partitions 206 each made of insulator. Each current collector 204 thus compartmentalized is connected with a lead line 212 via solder 211 and is connected with a voltage measuring device (not shown). Further, the current collector 205 is connected with the voltage measuring device via a copper plate 231. Note that, in the technique disclosed in the publication, not shown in drawings here, the voltage measuring device is arranged to include: a load device which is connected with the electrode-electrolyte structure of a fuel cell to be measured and controls a total current or a voltage between terminals in the electrode-electrolyte structure; a current measuring device for measuring a reaction current in each of a plurality of partial areas of the electrode-electrolyte structure; a resistance measuring device for measuring electrolyte resistance in each of the plurality of partial areas of the electrode-electrolyte structure; and a measurement controlling device for controlling the system for measuring distribution of an electrode reaction so that a reaction current and electrolyte resistance are measured simultaneously in an identical partial area out of the plurality of partial areas.

However, the conventional apparatus for measuring current distribution of a fuel cell and the conventional method for measuring current distribution of a fuel cell have such a problem that: the current collector 204 is compartmentalized by the partitions 206 and therefore a partial electromotive force in an electromotive force obtained from a whole of the electrode 202 in the fuel cell is not exactly reproduced.

The present invention was made in view of the foregoing problems. An object of the present invention is to provide a fuel cell current distribution measuring apparatus and a fuel cell current distribution measuring method, each of which allows exact reproduction of each partial electromotive force among the electromotive force obtained from a whole of electrodes in a fuel cell.

### DISCLOSURE OF INVENTION

The fuel cell current distribution measuring apparatus according to the present invention is a fuel cell current distribution measuring apparatus for obtaining electromotive force distribution on an electrode surface of a fuel cell which includes an electrolyte and a pair of electrodes between which the electrolyte is provided, said fuel cell current distribution measuring apparatus including: a plurality of electrically-connecting components which are touched by a non-compartment area of an electrode-corresponding surface of one of the pair of the electrodes; and current measuring means for measuring a current in each of the electrically-connecting components.

The fuel cell current distribution measuring method according to the present invention is a fuel cell current distribution measuring method for obtaining electromotive force distribution on an electrode surface of a fuel cell which includes an electrolyte and a pair of electrodes between which the electrolyte is provided, including the steps of: causing a plurality of electrically-connecting components to touch a non-compartment area of an electrode-corresponding surface of one of the pair of the electrodes; and measuring a current in each of the electrically-connecting components.

Note that, examples of the electrode-corresponding surface include not only an electrode but also a separator and a current collecting plate, each of which corresponds to an electrode.

With the invention, the plurality of electrically-connecting components are touched by the non-compartment area of the electrode-corresponding surface of one of the pair of the electrodes. In conventional techniques, an electrode-corresponding surface is compartmentalized by insulators, whereas in the present embodiment, the electrode-corresponding surface is not compartmentalized. Therefore, it is possible to measure current distribution of the electrode-corresponding surface which is really used.

Further, in the present embodiment, the electrically-connecting components touch the electrode-corresponding surface, but are not fixed with the electrode-corresponding surface via soldering or other methods. Therefore, it is easy to measure current distribution of the fuel cell.

Consequently, it is possible to provide the fuel cell current distribution measuring apparatus and the fuel cell current distribution measuring method, each of which allows for exact reproduction of a partial electromotive force out of an electromotive force obtained from the whole of the electrodes of the fuel cell.

Additional objects, features, and strengths of the present invention will be made clear by the description below. Further, the advantages of the present invention will be evident from the following explanation in reference to the drawings.

### BRIEF DESCRIPTION OF DRAWINGS

Fig. 1 is a schematic illustrating an outline of an embodiment of a fuel cell current distribution measuring apparatus of the present invention.
Fig. 2 is a front view illustrating a structure of the apparatus.
Fig. 3 is a block diagram illustrating a whole structure of the apparatus.
Fig. 4 is a cross sectional view illustrating a fuel cell and probes in the apparatus.
Fig. 5(a) is an exploded perspective view illustrating a structure of the fuel cell.
Fig. 5(b) is a perspective view illustrating in detail a main structure of a fuel electrode of the fuel cell.
Fig. 6(a) is a plan view illustrating an elevating device of the apparatus.
Fig. 6(b) is a front view illustrating the elevating device of the apparatus.
Fig. 7 is a plan view illustrating the probes and lead lines of the apparatus.
Fig. 8 is a block diagram illustrating an ultrasensitive magnetic sensor used in a current measuring section of the apparatus.
Fig. 9 is a block diagram illustrating a structure of a load device of the apparatus.
Fig. 10 is a front view illustrating a display section of a personal computer provided in the apparatus.
Fig. 11 is a schematic illustrating a basic structure of the fuel cell.
Fig. 12 is a cross sectional view illustrating a conventional apparatus for measuring current distribution of a fuel cell.

### BEST MODE FOR CARRYING OUT THE INVENTION

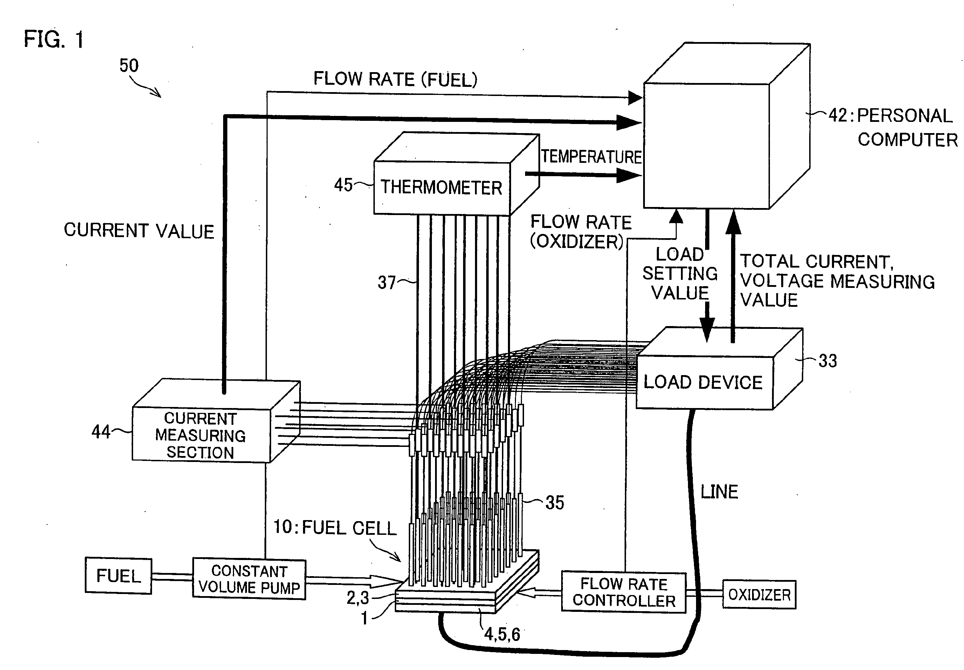

The following explains an embodiment of the present invention with reference to Figs. 1 to 10. In the present embodiment, an explanation is made as to measurement of distribution of an electromotive force on an electrode surface of a hydrogen fuel cell. However, the present embodiment is not limited to this and is applicable to other fuel cells such as a direct methanol fuel cell (DMFC).

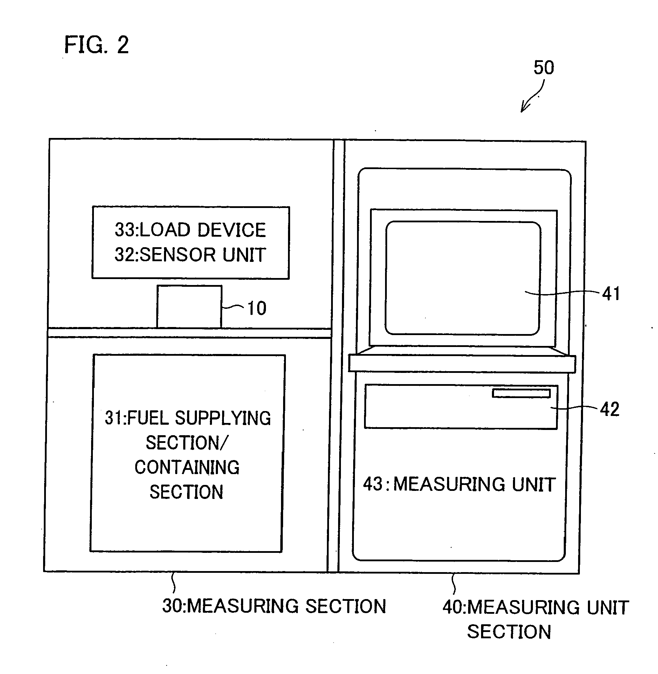

A fuel cell current distribution measuring apparatus 50 of the present embodiment is an apparatus to measure electromotive force distribution on an electrode surface of a fuel cell. As illustrated in Fig. 2, the fuel cell current distribution measuring apparatus 50 includes a measuring section 30 and a measuring unit section 40. In the present embodiment, the measuring section 30 and the measuring unit section 40 are integral with each other. This allows a system to integrally be conveyed. Note that, the present embodiment is not limited to this. Alternatively, the measuring section 30 and the measuring unit section 40 may be provided separately, for example.

The measuring section 30 includes: a fuel cell 10; a fuel supplying section/containing section 31 for supplying fuel and the like to the fuel cell 10, and for containing an elevating device 20, serving as elevating means, which will be mentioned later; a sensor unit 32 for measuring electromotive force distribution and temperature distribution on an electrode surface of the fuel cell 10; and a load device 33 which serves as resistance load means. Further, the measuring unit section 40 includes: a personal computer 42 which includes a display section 41 serving as display means; and a measuring unit 43.

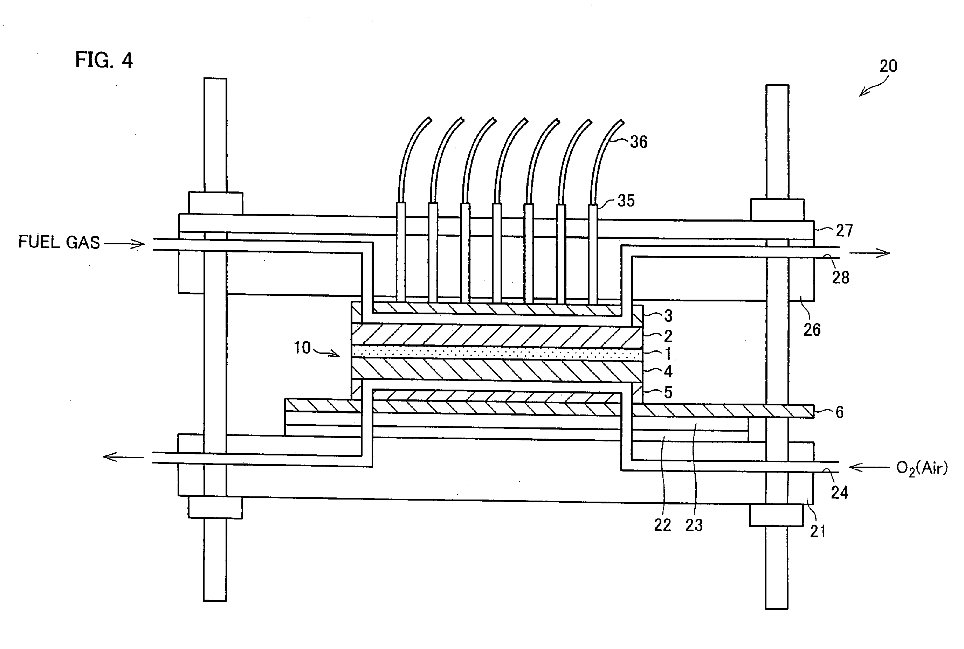

In the measuring section 30, as illustrated in Fig. 4, the fuel cell 10 includes: an electrolyte 1 which serves as an ion conductor; a fuel electrode 2 which is one of a pair of electrodes; a fuel-electrode-side separator 3; an air electrode 4 which is the other of the pair of electrodes; an air-electrode-side separator 5; and a current collecting plate 6.

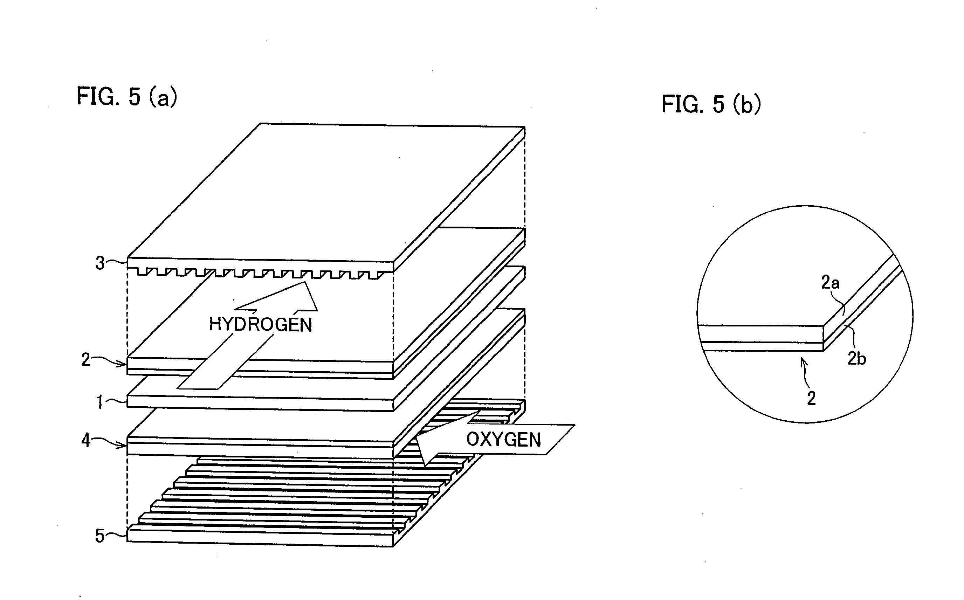

To be specific, as illustrated in Figs. 5(a) and 5(b), the fuel electrode 2 includes a carbon (C) electrode 2a and a platinum (Pt) catalyst 2b for example. The air electrode 4 has a similar structure to the fuel electrode 2.

As illustrated in Fig. 5(a), the fuel-electrode-side separator 3 and the air-electrode-side separator 5 have longitudinal stripe grooves and transverse stripe grooves, respectively. Each inside of the longitudinal stripe grooves of the fuel-electrode-side separator 3 is supplied with fuel gas such as hydrogen (H₂) gas, whereas each inside of the transverse stripe grooves of the air-electrode-side separator 5 is supplied with oxidizer gas such as hydrogen (O₂) or air.

Further, as illustrated in Fig. 4, an outer surface of the air-electrode-side separator 5 is provided with the current collecting plate 6, made of copper (Cu), which touches the air-electrode-side separator 5. The current collecting plate 6 serves as an external drawn-out electrode for the air-electrode 4.

In the measuring section 30, the fuel cell 10 is placed on a lower-side clamping plate 21, via a silicon sheet 22 and a rubber heater 23. Namely, in the present embodiment, the rubber heater 23 allows a temperature of the fuel cell 10 to be higher than a room temperature.

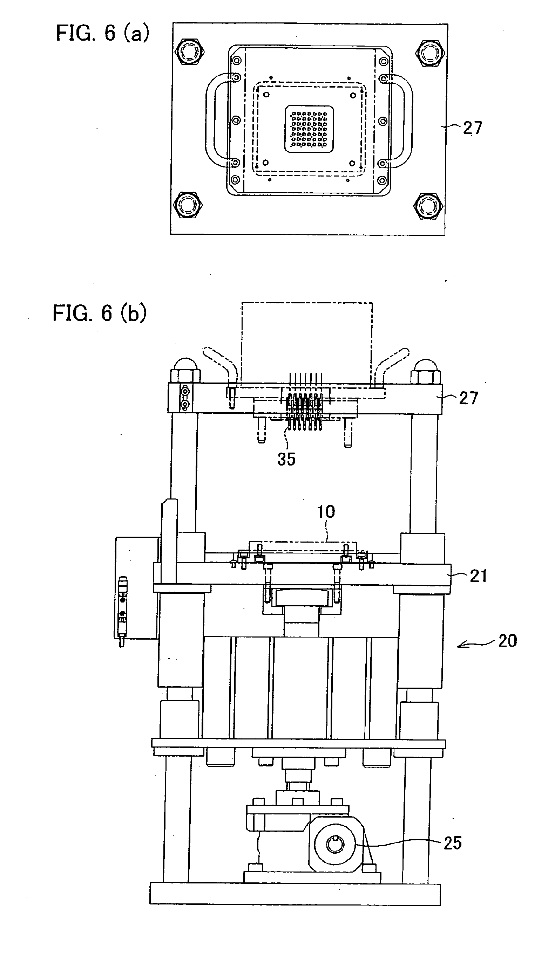

An air supplying route 24 for supplying the oxidizer gas such as oxygen (O₂) or air is formed inside the lower-side clamping plate 21. Further, in the present embodiment, as illustrated in Figs. 6(a) and 6(b), the lower-side clamping plate 21 is provided so as to be movable upward or downward by the elevating device 20 which includes an elevating motor 25.

On the other hand, as illustrated in Fig. 4, a plurality of probe pins 35, which serve both as electrically-connecting components and as touching pins, are provided on an outer surface of the fuel-electrode-side separator 3 which serves as an electrode-corresponding surface so that the probe pins 35 can touch the fuel-electrode-side separator 3. A fuel gas supplying route 28, which supplies the fuel gas such as hydrogen (H₂) gas, is formed inside an upper-side clamping plate 26. In the present embodiment, the fuel-electrode-side separator 3 does not have separations such as partitions used in conventional techniques. Consequently, the probe pins 35 touch non- compartment area on the outer surface of the fuel-electrode-side separator 3.

Further, in the present embodiment, the probe pins 35 penetrate penetrating holes formed in the upper-side clamping plate 26 and a probe jig plate 27. Further, when the probe pins 35 touch the fuel-electrode-side separator 3, springs (not shown) cause the probe pins 35 to push and touch the fuel-electrode-side separator 3.

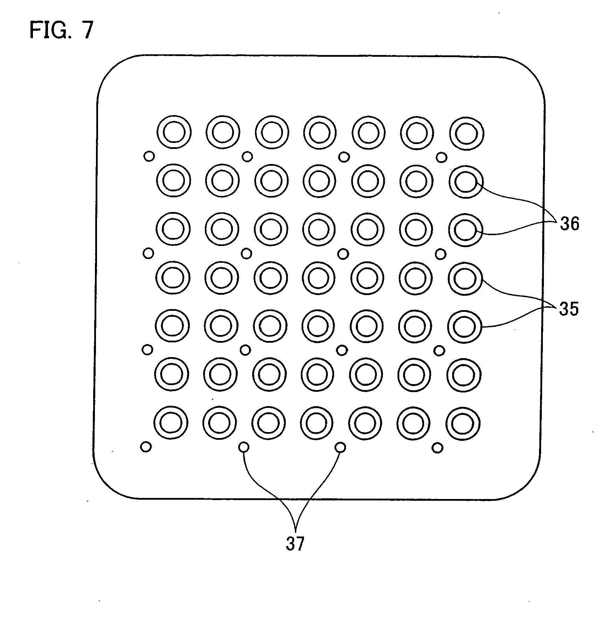

Further, in the present embodiment, as illustrated in Fig. 7, 7 × 7 = 49 pieces of the probe pins 35 are disposed with a 6mm pitch for example. The pitch is not limited to this and may be a 25mm pitch or a 45mm pitch. Namely, in the present embodiment, an experiment shows that: when the probe pins 35 with a 6mm pitch touch the fuel-electrode-side separator 3, it is possible to detect a difference in a current between an area and its adjacent area without compartmentalizing the fuel-electrode-side separator 3 by use of insulators. Consequently, in the present embodiment, the fuel-electrode-side separator 3 is not compartmentalized by insulators.

Further, in the present embodiment, as illustrated in Fig. 7, thermocouples 37 which serve as temperature detecting means for measuring a temperature of each part on a surface of the fuel-electrode-side separator 3 are provided so as to touch the fuel-electrode-side separator 3. Namely, the thermocouples 37 are arranged to touch, together with the probe pins 35, the surface of the fuel-electrode-side separator 3. In the present embodiment, 4 pieces in a longitudinal direction x 4 pieces in a transverse direction of the thermocouples 37 are provided near the probe pins 35.

Here, as illustrated in Figs. 6(a) and 6(b), the elevating device 20 includes the elevating motor 25 in a lower part thereof. In response to driving of the elevating motor 25, the lower-side clamping plate 21 is caused to move upward or downward.

Note that, in the present embodiment, the probe pins 35 are fixed whereas the fuel cell 10 moves upward or downward. However, the present embodiment is not limited to this and may be arranged so that the probe pins 35 can move upward or downward whereas the fuel cell 10 is fixed. However, the probe pins 35 are connected with lead lines 36 or other components. Therefore, when moving the probe pins 35, it is necessary to lengthen the lead lines 36, which raises a problem such as an increase in resistance. Accordingly, it is preferable to fix the probe pins 35.

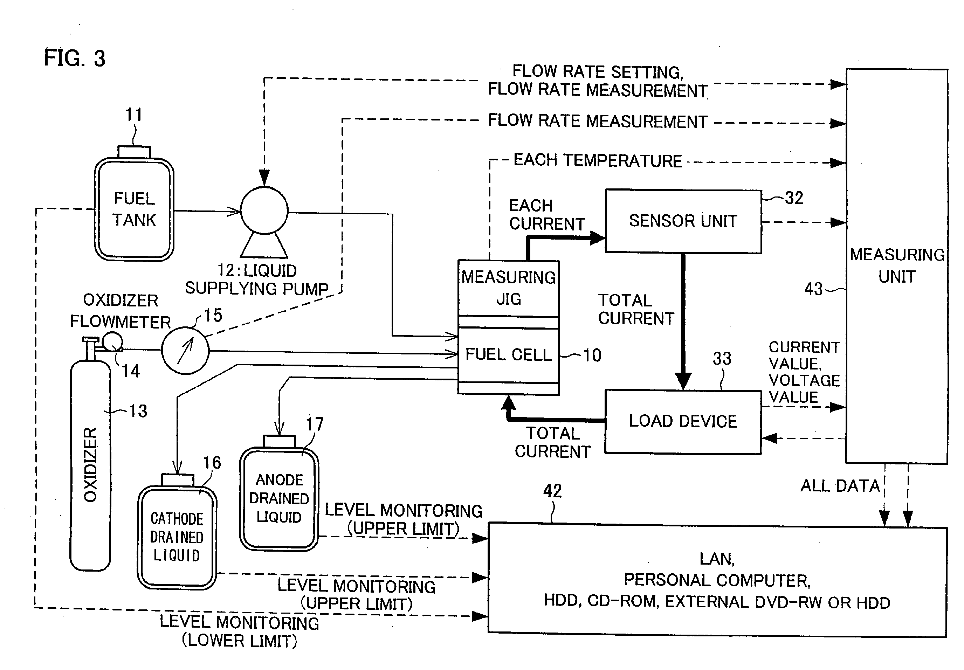

With reference to Fig. 3, the following explains an outline of the fuel cell current distribution measuring apparatus 50.

First, in order to operate the fuel cell 10, there is provided a fuel tank 11 for storing fuel gas such as hydrogen (H₂) gas. A liquid supplying pump 12 supplies the fuel gas from the fuel tank 11 to the fuel cell 10. Further, oxidizer gas such as oxygen (O₂) or air is supplied from an oxidizer cylinder 13 for storing the oxidizer gas to the fuel cell 10 via a pressure adjusting valve 14 and an oxidizer flowmeter 15.

Further, there are provided (i) a cathode drained liquid tank 16 for storing cathode (air-electrode-side) drained liquid and (ii) an anode drained liquid tank 17 for storing anode (fuel-electrode-side) drained liquid. Water level of the cathode drained liquid tank 16 and water level of the anode drained liquid tank 17 are monitored. If the water level reaches its upper limit, then information indicative thereof is transmitted to the personal computer 42. Further, water level of the fuel tank 11 is also monitored. If the water level reaches its lower limit, then information indicative thereof is transmitted to the personal computer 42.

Further, current distribution and temperature distribution on the surface of the fuel-electrode-side separator 3 of the fuel cell 10 are detected by the sensor unit 32, and data indicative of the distributions is sent to the personal computer 42 via the measuring unit 43. Further, there is connected the load device 33 for supplying resistance load used to obtain an appropriate current value during measuring of the current distribution on the surface of the fuel-electrode-side separator 3 of the fuel cell 10.

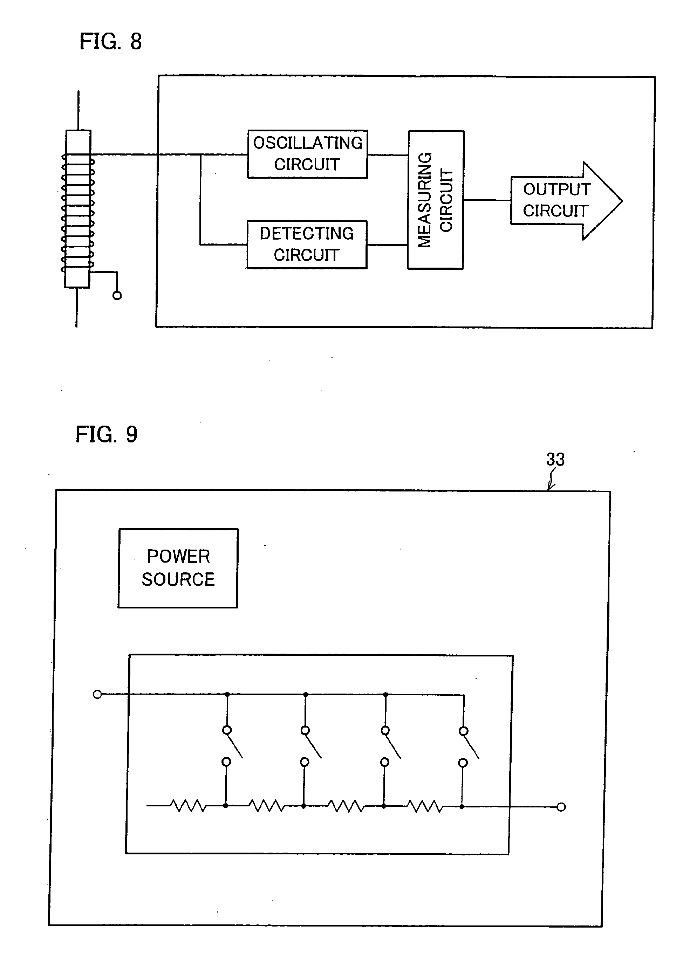

As illustrated in Fig. 1, the sensor unit 32 includes the probe pins 35 for detecting a current and the thermocouples 37 for measuring a temperature. Further, in the present embodiment, there is provided a current measuring section 44 which serves as current measuring means for measuring currents in the probe pins 35 by use of ultrasensitive magnetic sensors. Namely, in the present embodiment, the ultrasensitive magnetic sensors measure current magnetic fields. As illustrated in Fig. 8, when a current flows through a copper line, a magnetic field is generated. By measuring the magnetic field, it is possible to measure a current value. For example, a current of 0 to 150mA can be measured with a resolution of not more than 1mA. A result of the measurement is supplied to the personal computer 42 via the current measuring section 44.

Further, it is arranged so that temperatures which have been acquired by the thermocouples 37 are detected by a thermometer 45. As illustrated in Fig. 2, the current measuring section 44 and the thermometer 45 are contained in the measuring unit 43.

On the other hand, as illustrated in Fig. 9, the load device 33 includes plural kinds of resistors. The load device 33 is arranged so that, by selecting one of the resistors, an appropriate current value is outputted when the current measuring section 44 carries out a measurement. The selection of a resistor can be performed by the personal computer 42. In addition, the load device 33 of the present embodiment serves as an electronic load device capable of being in a mode such as a constant current load mode or a constant voltage load mode. The load device 33 is arranged so as to be capable of applying a load, whose maximum load is 200W, with a current of 40A or less and a voltage ranging from 0 to 200V, for example. This allows the load device 33 to be used in a current-voltage characteristic test during the modes and other load test.

Further, as illustrated in Fig. 3, a flow rate setting of the liquid supplying pump 12, a measured flow rate of the liquid supplying pump 12, and a flow rate of the oxidizer flowmeter 15 are supplied to the measuring unit 43.

The following explains a method in which the fuel cell current distribution measuring apparatus 50 measures current distribution of the surface of the fuel-electrode-side separator 3.

First, as illustrated in Fig. 4, the fuel cell 10 is placed on the lower-side clamping plate 21 in the elevating device 20, via the silicon sheet 22 and the rubber heater 23. Next, by driving the elevating motor 25 illustrated in Fig. 6(b), the fuel cell 10 is elevated and the surface of the fuel-electrode-side separator 3 of the fuel cell 10 is brought into contact with ends of the probe pins 35 and ends of the thermocouples 37. At that time, springs (not shown) of the probe pins 35 and the thermocouples 37 serve as cushions against shocks on the probe pins 35 and the thermocouples 37.

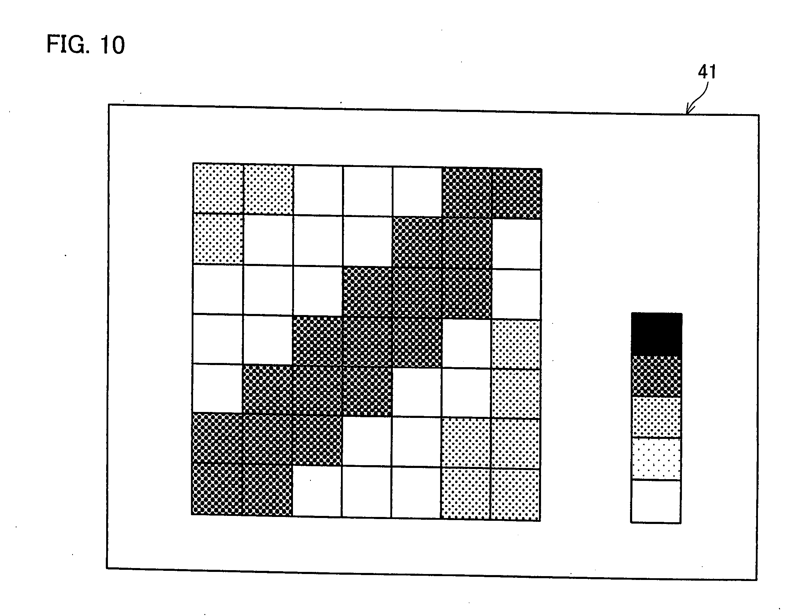

Next, in order to start operation of the fuel cell 10, fuel and oxidizer are supplied to the fuel cell 10. At that time, a flow rate of the fuel and a flow rate of the oxidizer are adjusted so as to have appropriate values. Next, by pressing a start button of the personal computer 42, the measurement is started. The flow rate of the fuel, the flow rate of the oxidizer, the measurement time, and the temperature of the fuel cell 10 are changed in accordance with test items so as to obtain data. By using the measurement data, it is possible to display an operational situation of the fuel cell 10 on the display section 41 of the personal computer 42 as illustrated in Fig. 10. For example, it is possible to display current distribution/elapsed time, current distribution/oxidizer flow rate, current distribution/fuel flow rate, temperature distribution, and other distribution. Further, it is possible to measure a plurality of test items simultaneously, at an interval of not more than 10m second for example, so that it is possible to display changes caused in a short time.

Note that, after the operation of the fuel cell 10 stops, it is possible to reproduce the operational situation of the fuel cell 10 on the display section 41 by use of data stored in the personal computer 42.

In the fuel cell current distribution measuring apparatus 50, it is possible to measure, record, and display changes in a current and temperature in a very short time. Therefore, it is possible to obtain a relation between (i) the amount of supplied fuel, supplied oxidizer, and the like and (ii) a state of power generation. Further, degrees of freedom is high in setting the number or combination of the probe pins 35 for measuring current distribution, so that it is possible to widely apply the present embodiment to fuel cells having different sizes. Further, it is possible to use the fuel cell 10 and the fuel-electrode-side separator 3 which are really used, so that it is possible to perform measurement in which data more approximate to that of a real fuel cell 10 can be obtained.

Further, in conventional techniques, the fuel-electrode-side separator 3 is compartmentalized by insulators. In the present embodiment, it is unnecessary to provide a fuel-electrode-side separator 3 used specifically for measurement, and it is possible to perform measurement, by use of the probe pins 35, at the outer surface of the fuel-electrode-side separator 3 of the fuel cell 10 in real use. Therefore, it is easy to change points to be measured.

Further, the method of the present embodiment for measuring a current is such that the ultrasensitive magnetic sensors measure current magnetic fields. Therefore, it is unnecessary to pay attention to variations in internal resistance of a measuring device. Further, unnecessary resistors are not used in measurement, so that it is possible to reduce errors in the measurement. Unnecessary resistors are not used in a load system, so that the fuel cell 10 is not unnecessarily burdened.

Further, the fuel cell current distribution measuring apparatus 50 is contained in a movable rack and therefore can be easily moved.

As described above, in the fuel cell current distribution measuring apparatus 50 of the present embodiment, the probe pins 35 are touched by non-compartment area on the outer surface of the fuel-electrode-side separator 3 on one of a pair of electrodes. In conventional techniques, the fuel-electrode-side separator 3 is compartmentalized by the insulators, whereas in the present embodiment, the fuel-electrode-side separator 3 is not compartmentalized. Therefore, it is possible to measure current distribution of the outer surface of the fuel-electrode-side separator 3 which is really used.

Further, in the present embodiment, the probe pins 35 touch the outer surface of the fuel-electrode-side separator 3, but are not fixed with the outer surface via soldering or other methods. Therefore, it is easy to measure current distribution of the fuel cell.

Consequently, it is possible to provide the fuel cell current distribution measuring apparatus 50 and a fuel cell current distribution measuring method, each of which allows exact reproduction of a partial electromotive force out of an electromotive force obtained from the whole of the fuel-electrode-side separator 3 of the fuel cell 10.

Further, in the fuel cell current distribution measuring apparatus 50 of the present embodiment, the probe pins 35 are touching pins, so that it is easy for the probe pins 35 not only to touch the outer surface of the fuel-electrode-side separator 3 but also to touch narrow areas.

Further, in the fuel cell current distribution measuring apparatus 50 of the present embodiment, the probe pins 35 can touch the outer surface of the fuel-electrode-side separator 3, so that it is possible to cause the probe pins 35 to touch the outer surface of the fuel-electrode-side separator 3 in measuring current distribution of the fuel cell. Therefore, it is unnecessary to fix the probe pins 35 with the outer surface of the fuel-electrode-side separator 3, so that it is easy to measure the current distribution of the fuel cell and to change the points to be measured.

Further, in the fuel cell current distribution measuring apparatus 50 of the present embodiment, by causing the elevating device 20 to elevate the fuel cell, it is possible to cause the outer surface of the fuel-electrode-side separator 3 to touch the ends of the probe pins 35. Therefore, it is possible to cause the outer surface of the fuel-electrode-side separator 3 to automatically touch the probe pins 35.

In a conventional method for measuring current distribution of a fuel cell, it is difficult to measure a current at ultra-low impedance and it is difficult to detect a partial current because of low resistance on the electrode-corresponding surface.

Therefore, in the present embodiment, the current measuring section 44 measures a current value by detecting a magnetic force generated by a current in each of the probe pins 35. Consequently, it is possible to measure a current at ultra-low impedance and to detect a partial current on the outer surface of the fuel-electrode-side separator 3. Further, no resistance load is used and therefore the load system of the fuel cell is not burdened.

Further, in the fuel cell current distribution measuring apparatus 50 of the present embodiment, the load device 33 applies a predetermined resistance in measuring a current, which allows a current value to be within an appropriate and predetermined range.

Further, in the fuel cell current distribution measuring apparatus 50 of the present embodiment, there are provided the thermocouples 37 which can touch the outer surface of the fuel-electrode-side separator 3 together with the probe pins 35, so that it is possible to measure current distribution of the fuel cell in consideration of the influence of a temperature.

Further, the fuel cell current distribution measuring apparatus 50 of the present embodiment is provided with the display section 41 for displaying electromotive force distribution on the outer surface of the fuel-electrode-side separator 3 of the fuel cell 10, so that it is possible to see and check the distribution.

As described above, in the fuel cell current distribution measuring apparatus of the present invention, each of the electrically-connecting components is made of a touching pin.

Therefore, it is easy for each of the electrically-connecting components to touch the electrode-corresponding surface and to touch a narrow area.

Further, in the fuel cell current distribution measuring apparatus of the present invention, the touching pin is capable of touching the electrode-corresponding surface of one of the pair of the electrodes.

Therefore, it is possible to cause the touching pin to touch the electrode-corresponding surface in measuring current distribution of the fuel cell. Consequently, it is unnecessary to fix the touching pin to the electrode-corresponding surface, so that it is easy to measure current distribution of the fuel cell and to change points to be measured.

Further, the fuel cell current distribution measuring apparatus of the present invention includes elevating means for moving upward or downward the fuel cell.

With the invention, the elevating means moves upward or downward the fuel cell, so that it is possible to cause the electrode-corresponding surface to touch the end of the touching pin. Therefore, it is possible to cause the electrode-corresponding surface to automatically touch the touching pin.

Further, in the fuel cell current distribution measuring apparatus of the present invention, the current measuring means detects a magnetic force generated by a current in each of the electrically-connecting components so as to measure a current value.

Further, in the fuel cell current distribution measuring method of the present invention, a magnetic force generated by a current in each of the electrically-connecting components is detected so that a current value is measured.

In conventional measurement of current distribution of a fuel cell, it is difficult to measure a current at ultra-low impedance or to obtain a partial current because the electrode-corresponding surface has low resistance.

Therefore, in the present embodiment, the current measuring means measures a current value by detecting a magnetic force generated by a current in each of the electrically-connecting components. Consequently, it is possible to measure a current at ultra-low impedance and to obtain a partial current on the electrode-corresponding surface. Further, there is no resistance load, so that the load system of the fuel cell is not burdened.

Further, the fuel cell current distribution measuring apparatus of the present invention includes resistance load means which is connected between the electrically-connecting components and the other of the pair of the electrodes so as to give a predetermined resistance value.

With the invention, the resistance load means gives a predetermined resistance value in measuring a current, so that it is possible to cause a current value to be within an appropriate and predetermined range.

Further, the fuel cell current distribution measuring apparatus of the present invention includes a plurality of temperature detecting means each of which is capable of touching, together with the electrically-connecting components, the electrode-corresponding surface of the one of the pair of the electrodes.

With the invention, it is possible to measure current distribution of a fuel cell in consideration of the effect of temperature.

The fuel cell current distribution measuring apparatus of the present invention includes display means for displaying electromotive force distribution on the electrode surface of the fuel cell.

Therefore, it is possible to see and check the distribution.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### INDUSTRIAL APPLICABILITY

The present invention is applicable to measurement of electromotive force distribution on an electrode surface of a hydrogen fuel cell, a direct methanol cell (DMFC) or other fuel cells.

## Claims

1. A fuel cell current distribution measuring apparatus for measuring electromotive force distribution on an electrode surface of a fuel cell which includes an electrolyte and a pair of electrodes between which the electrolyte is provided, said fuel cell current distribution measuring apparatus comprising:
a plurality of electrically-connecting components which are touched by a non-compartment area of an electrode-corresponding surface of one of the pair of the electrodes; and
current measuring means for measuring a current in each of the electrically-connecting components.

2. The fuel cell current distribution measuring apparatus as set forth in claim 1, wherein each of the electrically-connecting components is made of a touching pin.

3. The fuel cell current distribution measuring apparatus as set forth in claim 2, wherein the touching pin is capable of touching the electrode-corresponding surface of one of the pair of the electrodes.

4. The fuel cell current distribution measuring apparatus as set forth in claim 3, comprising elevating means for moving upward or downward the fuel cell.

5. The fuel cell current distribution measuring apparatus as set forth in any one of claims 1 to 4, wherein the current measuring means detects a magnetic force generated by the current in each of the electrically-connecting components so as to measure a current value.

6. The fuel cell current distribution measuring apparatus as set forth in any one of claims 1 to 5, comprising resistance load means which is connected between the electrically-connecting components and the other of the pair of the electrodes so as to give a predetermined resistance value.

7. The fuel cell current distribution measuring apparatus as set forth in any one of claims 1 to 6, comprising a plurality of temperature detecting means each of which is capable of touching, together with the electrically-connecting components, the electrode-corresponding surface of the one of the pair of the electrodes.

8. The fuel cell current distribution measuring apparatus as set forth in any one of claims 1 to 7, comprising display means for displaying electromotive force distribution on the electrode surface of the fuel cell.

9. A fuel cell current distribution measuring method for measuring electromotive force distribution on an electrode surface of a fuel cell which includes an electrolyte and a pair of electrodes between which the electrolyte is provided, comprising the steps of:
causing a plurality of electrically-connecting components to touch a non-compartment area of an electrode-corresponding surface of one of the pair of the electrodes; and
measuring a current in each of the electrically-connecting components.

10. A fuel cell current distribution measuring method as set forth in claim 9, wherein
a magnetic force generated by the current in each of the electrically-connecting components is detected so that a current value is measured.
